(19) Europäisches Patentamt
European Patent Office
Office européen des brevets

(11) Publication number: **0 311 076 A2**

(12) **EUROPEAN PATENT APPLICATION**

(21) Application number: 88116572.4

(22) Date of filing: 06.10.88

(51) Int. Cl.4: C08G 59/40 , C08L 79/08

(30) Priority: 06.10.87 JP 252077/87

(43) Date of publication of application: 12.04.89 Bulletin 89/15

(84) Designated Contracting States: DE FR GB NL

(71) Applicant: MITSUBISHI PETROCHEMICAL CO., LTD.
5-2, 2-chome, Marunouchi
Chiyoda-ku Tokyo 100(JP)

(72) Inventor: Kanayama, Kaoru
Mitsubishi Petrochem. Co.Ltd. 3-1, Chuo 8-chome
Ami-machi Inashiki-gun Ibaraki(JP)
Inventor: Ohnuma, Yoshinobu
Mitsubishi Petrochem. Co.Ltd. 3-1, Chuo 8-chome
Ami-machi Inashiki-gun Ibaraki(JP)

(74) Representative: Hansen, Bernd, Dr.rer.nat. et al
Hoffmann, Eitle & Partner Patentanwälte
Arabellastrasse 4
D-8000 München 81(DE)

(54) **Thermosetting resin composition.**

(57) A thermosetting resin composition is disclosed, comprising (A) polymaleimide containing from 5 to 90% by weight, based on the total amount of the component (A), of a polyamaleimide compound represented by formula (I):

EP 0 311 076 A2

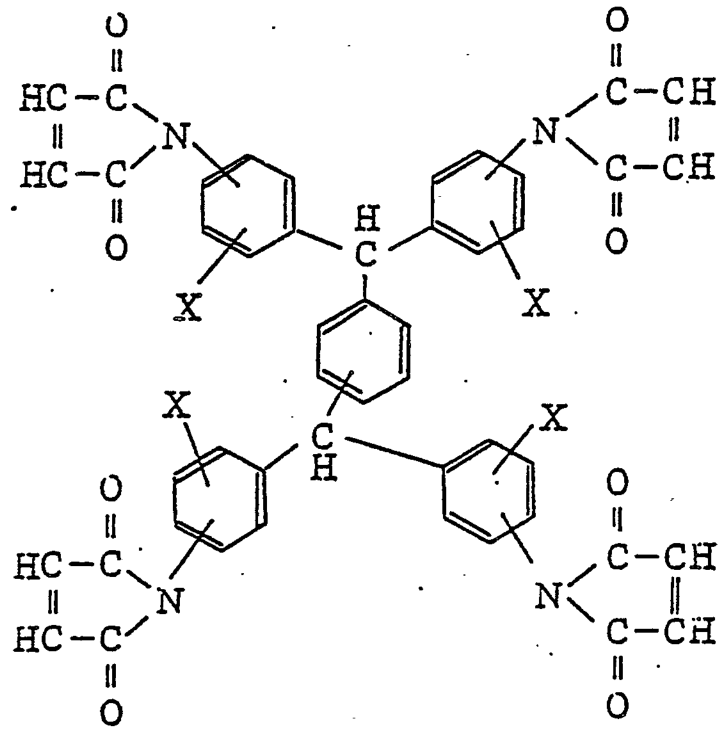

(I)

wherein X represents a hydrogen atom, a halogen atom or an alkyl or alkoxy group having from 1 to 4 carbon atoms, (B) an epoxy compound having at least two epoxy groups per molecule, and (C) a curing agent for said epoxy compound, the compounding weight ratio of (A) to (B) being from 0.05/1 to 20/1, and the compounding weight ratio of (B) to (C) being from0.5/1 to 200/1. The composition exhibits improved moldability, curability and heat resistance.

# THERMOSETTING RESIN COMPOSITION

## FIELD OF THE INVENTION

This invention relates to a thermosetting resin composition excellent in heat resistance, which is useful as multi-layer laminate resin, material for sliding parts, material for sealants, molding material, powder coating, and adhesive.

## BACKGROUND OF THE INVENTION

In the fields of electric or electronic equipments and transport equipments, e.g., those of airplanes and vehicles, demands for materials having further improved heat resistance have been increasing with the recent developments of equipments with high performances or reduced size and weight.

In these fields, epoxy resins, maleimide resins and polyimide resins have chiefly been employed. Although epoxy resins are excellent in mechanical and electrical characteristics, they do not always exhibit sufficient heat resistance. Polyimide resins, though excellent in heat resistance, encounter difficulty in molding due to their insolubility and infusibility.

For the purpose of improving moldability of polyimide, a bismaleimide resin of addition type has been proposed. However, a cured resin obtained by mere thermal polymerization of the bismaleimide resin of addition type is very brittle and easily causes cracks on receiving thermal shocks, such as cooling and heating, failing to withstand practical use.

In order to eliminate the above-stated disadvantage of bismaleimide while retaining its superior heat resistance, a polyaminobismaleimide resin that is a prepolymer of N,N′-4,4′-diphenylmethanebismaleimide and 4,4′-diaminodiphenylmethane has been developed and put into practical use as a resin sufficiently withstanding practical use. However, making full use of the characteristics of this polyaminobismaleimide resin requires heating at high temperature for long periods of time, thus proving bad economy. Hence, it has been attempted to improve curability of the polyaminobismaleimide resin by compounding an epoxy resin as disclosed in JP-B-47-42160 (the term "JP-B" as used herein means an "examined published Japanese patent publication"). It has been turned out, however, that the cured resin obtained from the epoxy resin-compounded composition is inferior in stability on long-term exposure to a high temperature atmosphere, failing to manifesting heat stability inherent to bismaleimide.

## SUMMARY OF THE INVENTION

One object of this invention is to provide a thermosetting resin composition having improved moldability, curability and heat stability.

This invention relates to a thermosetting resin composition comprising (A) polymaleimide having at least two maleimide groups in the molecule thereof containing from 5 to 90% by weight, based on the total amount of the component (A), of a polymaleimide compound represented by formula (I):

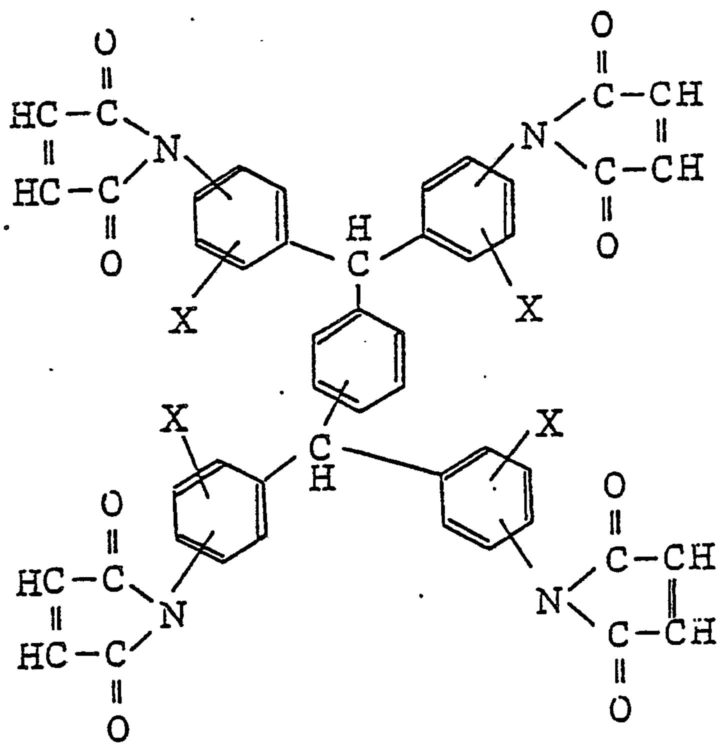

(I)

wherein X represents a hydrogen atom, a halogen atom or an alkyl or alkoxy group from 1 to 4 carbon atoms, (B) an epoxy compound having at least two, preferably 2 to 50, epoxy groups per molecule, and (C) a curing agent for said epoxy compound, the compounding weight ratio of (A) to (B) being from 0.05/1 to 20/1, and the compounding weight ratio of (B) to (C) being from 0.5/1 to 200/1.

## DETAILED DESCRIPTION OF THE INVENTION

The polymaleimide compound represented by formula (I) which is used in the component (A) can be prepared according to the process disclosed in JP-A-59-12931 (the term "JP-A" as used herein means an "unexamined published Japanese patent application"). That is, the polymaleimide compound of formula (I) can be synthesized by reacting 1 mol of an aromatic dialdehyde with 2 to 60 mols, preferably 4 to 32 mols, of an aromatic amine represented by formula (II):

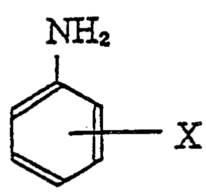

(II)

wherein X represents a hydrogen atom, a halogen atom or an alkyl or alkoxy group having from 1 to 4 carbon atoms, to obtain a polyamine, addition reacting the polyamine with maleic anhydride to obtain a polyamide acid, and subjecting the polyamide acid to dehydrating cyclization.

The polymaleimide as the component (A) contains, in addition to the polymaleimide compound of formula (I), polymaleimide compounds having at least two, preferably 2 to 30, maleimide groups in the molecule thereof. Specific examples of such polymaleimide compounds are (i) bismaleimides, e.g., N,N′-ethylenebismaleimide, N,N′-hexamethylenebismaleimide, N,N′-m-phenylenebismaleimide, N,N′-p-phenylenebismaleimide, N,N′-4,4′-diphenylmethanebismaleimide, N,N′-4,4′-diphenyletherbismaleimide, N,N′-methylenebis(3-chloro-p-phenylene)bismaleimide, N,N′-4,4′-diphenylsulfonebismaleimide, N,N′-4,4′-dicyclohexylmethanebismaleimide, N,N′-α,α′-4,4′-dimethylenecyclohexanebismaleimide, N,N′-m-xylylenebismaleimide, N,N′-4,4′-diphenylcyclohexanebismaleimide, N,N′-4,4′-diphenyl-1,1-pro-panebismaleimide, N,N′-4,4′-triphenyl-1,1,1-ethanebismaleimide, N,N′-4,4′-triphenylmethanebismaleimide, N,N′-3,5-triazole-1,2,4-bismaleimide, etc.; and (ii) poly(N-phenylmethylene)maleimide represented by formula (III):

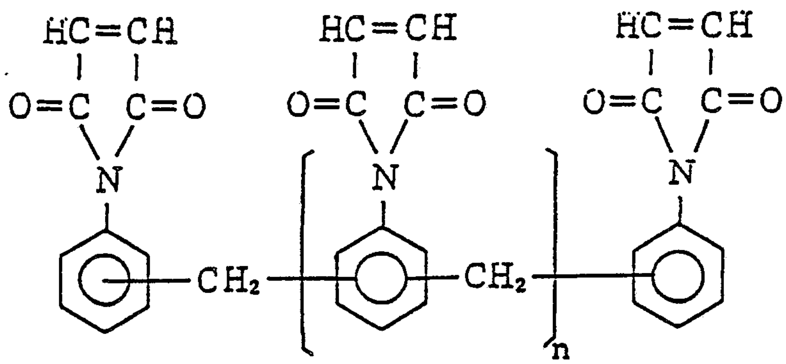

(III)

wherein n represents a number of from 0.1 to 10.

If the content of the polymaleimide compound represented by formula (I) in the component (A) is less than 5% by weight, the resulting cured resin is inferior in heat resistance. If it exceeds 90% by weight, the cured resin has deteriorated impact resistance.

Implicit in the epoxy compound having at least two, preferably 2 to 50, epoxy groups per molecule as the component (B) are (i) diglycidyl ether of bisphenol A, e.g., Epikote 827, 828, 834, 1001, 1004, 1007, and 1009 (tradenames of Yuka-Shell Epoxy Co., Ltd.), Araldite GY 250 and 6099 (tradenames of Chiba Ltd.), ERL 2774 (tradename of Union Carbide Co., Ltd.), and DER 332, 331 and 661 (tradenames of Dow Chemical Co., Ltd.); (ii) epoxy-phenol novolak resins, e.g., Epikote 152 and 154 (tradenames of Yuka-Shell Epoxy Co., Ltd.), DEN 438 and 448 (tradenames of Dow Chemical Co., Ltd.), and Araldite EPN 1138 and 1139 (tradenames of Chiba Ltd.); (iii) epoxy-cresol novolak resins, e.g., Araldite ECN 1235, 1273 and 1280 (tradenames of Chiba Ltd.); and (iv) brominated epoxy resins, e.g., Epikote 5050 (tradename of Yuka-Shell Epoxy Co., Ltd.) and BREN (tradename of Nippon Kayaku Co., Ltd.). Additional examples of the epoxy compound include diglycidyl ether of bisphenol F, glycidyl ester compounds obtained from phthalic acid, hexahydrophthalic acid or a dimer acid and epichlorohydrin, epoxy resins obtained from an aromatic amine (e.g., aminophenol, diaminodiphenylmethane) and epichlorohydrin, alicyclic epoxy resins obtained from dicyclopentadiene, etc. and peracetic acid, 1,4-butanediol diglycidyl ether, 1,6-hexanediol diglycidyl ether, etc.

The curing agent as the component (C) for the epoxy compound as the component (B) includes general curing agents for epoxy resins. Specific examples of usable curing agents are (i) amines, such as aliphatic amines (e.g., triethylenetetramine, tetraethylenepentamine, N-aminoethylpiperazine, isophoronediamine), aromatic amines (e.g., metaphenylenediamine, diaminodiphenylmethane, diaminodiphenylsulfone), and tertiary amines (e.g., benzyldimethylamine, 2,4,6-tris(dimethylaminomethyl)phenol, DBU); (ii) acid anhydrides, such as aromatic acid anhydrides (e.g., phthalic anhydride, trimellitic anhydride, pyromellitic anhydride), and alicyclic acid anhydrides (e.g., tetrahydrophthalic anhydride, methyltetrahydrophthalic anhydride, hexahydrophthalic anhydride); (iii) polyhydric phenols (e.g., bisphenol F, bisphenol A, phenolic novolak resins, p-hydroxystyrene resins); and (iv) others; imidazole compounds, amine-$BF_3$ complex compounds, dicyanodiamides, organic acid hydrazides, polymercaptanes, etc.

These curing agents may be used either individually or in combination of two or more thereof.

The performance properties of the thermosetting resin composition of the present invention can be varied according to the method of use, performance requirements, and end use by controlling the compounding ratio of the components (A), (B), and (C). In more detail, when heat resistance is required, the compounding ratio of the component (B) is preferably reduced. On the other hand, when weight is put on adhesiveness or water resistance, the ratio of the component (B) is preferably increased. From these considerations, a weight ratio of component (A) to component (B) ranges from 0.05/1 to 20.0/1, preferably from 0.1/1 to 10/1, and a weight ratio of component (B) to component (C) ranges from 0.5/1 to 200/1, preferably from 1/1 to 50/1.

If desired, the thermosetting resin composition in accordance with the present invention can contain various additives, such as powderous or fibrous reinforcements or fillers, colorants, pigments, and flame-retardants. Implicit in the powderous reinforcements or fillers are metal oxides (e.g., aluminum oxide, magnesium oxide), metal hydroxides (e.g., aluminum hydroxide), metal carbonates (e.g., calcium carbonate, magnesium carbonate), diatomaceous earth, basic magnesium silicate, calcined clay, silica fine powder,

fused silica, crystalline silica, carbon black, kaolin, mica fine powder, quartz powder, graphite, asbestos, molybdenum disulfide, antimony trioxide, etc. Included in the fibrous reinforcements or fillers are inorganic fibers (e.g., glass fiber, rock wool, ceramic fiber, asbestos, carbon fiber), paper, pulp, wood meal, linter, and synthetic fibers (e.g., polyamide fiber). The amount of these powderous or fibrous reinforcements or fillers to be added varies depending on use. For example, for use as laminate resins or molding materials, they are usually added in an amount up to 500 parts by weight per 100 parts by weight of the resin composition.

Specific examples of the colorants, pigments or flame-retardants include titanium dioxide, chrome yellow, carbon black, iron black, moblydenum red, Prussian blue, ultramarine blue, cadmium yellow, cadmium red, inorganic phosphorus (e.g., red phosphorus), and organic phosphorus (e.g., triphenyl phosphite).

The resin composition may further contain various synthetic resins for the purpose of improving characteristics of the resin required in the final use, e.g., as coating films, adhesive layers, resin molded articles, etc. Such synthetic resins include phenolic resins, alkyd resins, melamine resins, fluoroplastics, vinyl chloride resins, acrylic resins, silicone resins, polyester resins, and mixtures of two or more thereof. These synthetic resins should be preferably compounded in such an amount that does not impair properties inherently possessed by the resin composition, i.e., in an amount of less than 50% by weight based on the total resin content.

The resin composition of the present invention can be prepared by mixing the above-described components (A), (B), (C) and, if desired, additives under heating or kneading them by means of a roll, a kneader, etc. either in a wet process in the presence of an appropriate organic solvent or in a dry process.

The thermosetting resin composition in accordance with the present invention provides a cured product having superior curability and heat resistance as compared with the conventional bismaleimide resins.

The present invention is now illustrated in greater detail with reference to the following Examples, but it should be understood that the present invention is not deemed to be limited thereto. In these examples, all the parts are by weight unless otherwise indicated. In the examples, polymaleimide obtained from 1,3-benzenedialdehyde (1 mol), aniline (8 mols), and maleic anhydride (2.1 mols) [hereinafter referred to as Polymaleimide A (maleimide equivalent: 200 g/eq., melting point: 175 to 185°C)] or polymaleimide obtained from 1,4-benzenedialdehyde (1 mol), aniline (4 mols), o-toluidine (4 mols), and maleic anhydride (2.1 mols) [hereinafter referred to as Polymaleimide B (maleimide equivalent: 230 g/eq., melting point: 180 to 190°C)] was used as the polymaleimide compound represented by formula (I).

## EXAMPLE 1

Fifteen parts of N,N′-4,4′-diphenylmethanebismaleimide, 15 parts of Polymaleimide A, 70 parts of diglycidyl ether of bisphenol A ("Epikote 828" produced by Yuka-Shell Epoxy Co., Ltd.), and 24 parts of 4,4-diaminodiphenylmethane were mixed at 100°C. After defoaming, the mixture was poured into a metallic mold and cured at 120°C for 3 hours and then at 200°C for 5 hours to obtain a cured product having a length of 127 mm, a width of 12.7 mm, and a thickness of 6.4 mm.

Physical properties of the resulting cured product are shown in Table 1 below.

## EXAMPLES 2 TO 8 AND COMPARATIVE EXAMPLE 1

A cured product was obtained in the same manner as in Example 1, except for using the components shown in Table 1. Physical properties of the cured product are shown in Table 1.

TABLE 1

| Example No. | Polymaleimide: DPMBM*1 (parts) | Polymaleimide: Polymaleimide (I) (parts) | Epoxy Compound (parts) | Curing Agent (parts) | Heat Distortion Temperature*2 (°C) | Thermal Decomposition Point*3 (°C) |
|---|---|---|---|---|---|---|
| 1 | (15) | A (15) | Epikote 828*4 (70) | 4,4'-diaminodiphenylmethane (24) | 197 | 348 |
| 2 | (15) | B (15) | " (70) | " (24) | 193 | 353 |
| 3 | (20) | A (20) | Epikote 807*5 (60) | $C_{11}Z$-CN*6 (4) | 265 | 366 |
| 4 | (20) | B (20) | " (60) | " (4) | 260 | 370 |
| 5 | (20) | A (30) | Epikote 154*7 (50) | MNA*8 (45)<br>2E4MZ*9 (1) | 289 | 364 |
| 6 | (20) | B (30) | " (50) | " " | 286 | 366 |
| 7 | (20) | A (20) | Epikote 828 (60) | phenolic resin (32)<br>2E4MZ (1) | 166 | 408 |
| 8 | (20) | B (20) | " (60) | " " | 164 | 410 |
| comparative Example 1 | (30) | - - | " (70) | 4,4'-diaminodiphenylmethane (25) | 182 | 343 |

Note: *1 : N,N'-4,4'-Diphenylmethanebismaleimide

*2 : Determined according to ASTM-D-648

*3 : A temperature at which a weight loss of the cured resin due to heating in an air oven at a rate of 10°C/min reached 5 wt%.

*4 : Diglycidyl ether of bisphenol A (produced by Yuka-Shell Epoxy Co., Ltd)

*5 : Diglycidyl ether of bisphenol F (produced by Yuka-Shell Epoxy Co., Ltd.)

*6, *9 : Imadazole compound produced by Shikoku Fine Chemical Co., Ltd.

*7 : Epoxy-phenol novolak resin produced by Yuka-Shell Epoxy Co., Ltd.

*8 : Methylnudic anhydride

While the invention has been described in detail and with reference to specific embodiments thereof, it will be apparent to one skilled in the art that various changes and modifications can be made therein without departing from the spirit and scope thereof.

## Claims

1. A thermosetting resin composition comprising (A) polymaleimide having at least two maleimide groups in the molecule thereof containing from 5 to 90% by weight, based on the total amount of the component (A), of a polymaleimide compound represented by formula (I):

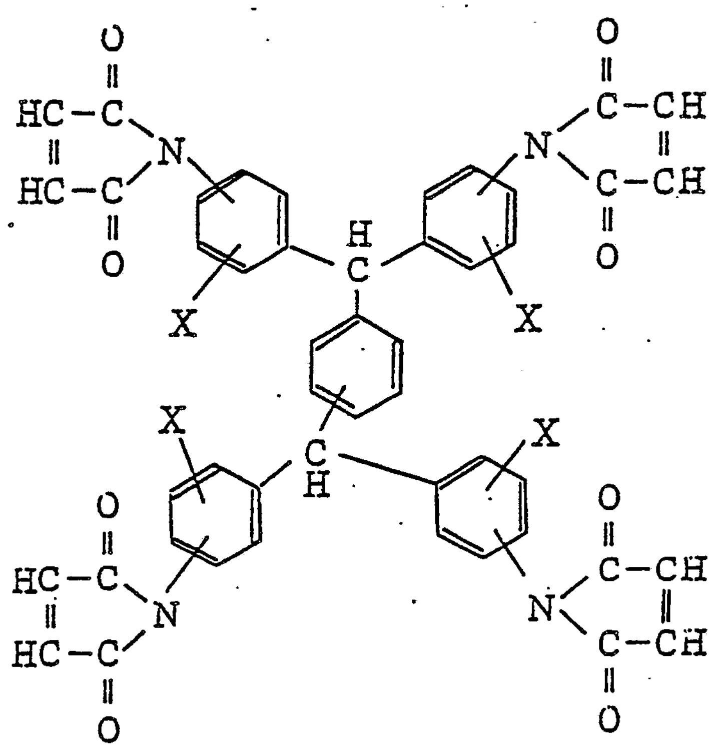

(I)

wherein X represents a hydrogen atom, a halogen atom or an alkyl or alkoxy group having from 1 to 4 carbon atoms, (B) an epoxy compound having at least two epoxy groups per molecule, and (C) a curing agent for said epoxy compound, the compounding weight ratio of (A) to (B) being from 0.05/1 to 20/1, and the compounding weight ratio of (B) to (C) being from 0.5/1 to 200/1.

2. The thermosetting resin composition as claimed in claim 1, wherein the polymaleimide as the component (A) other than the polymaleimide compound represented by formula (I) is selected from the group consisting of bismaleimides and poly(N-phenylmethylene)maleimide represented by formula (III):

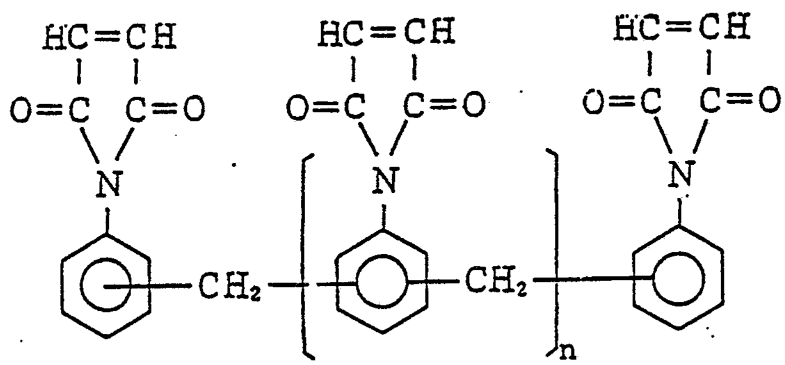

(III)

wherein n represents a number of from 0.1 to 10.

3. The thermosetting resin composition as claimed in claim 1, wherein said epoxy compound having at least two epoxy groups per molecule as the component (B) is selected from the group consisting of diglycidyl ether of bisphenol A, epoxy-phenol novolak resins, epoxy-cresol novolak resins, brominated epoxy resin, diglycidyl ether of bisphenol F, glycidyl ester compounds obtained from phthalic acid, hexahydrophthalic acid or a dimer acid and epichlorohydrin, epoxy resins obtained from an aromatic amine and epichlorohydrin, alicyclic epoxy resins obtained from dicyclopentadiene and peracetic acid, 1,4-butanediol diglycidyl ether and 1,6-hexanediol diglycidyl ether.

4. The thermosetting resin composition as claimed in claim 1, wherein said curing agent as the component (C) is selected from the group consisting of amines, acid anhydrides, polyhydric phenols and imidazole compounds.

5. The thermosetting resin composition as claimed in claim 1, wherein said compounding weight ratio of (A) to (B) is from 0.1/1 to 10/1, and said compounding weight ratio of (B) to (C) is from 1/1 to 50/1.